# EUROPEAN PATENT APPLICATION

(11) **EP 2 369 189 A1**
(43) Date of publication of application: **28.09.2011**
(21) Application number: 11152918.6
(22) Date of filing: 01.02.2011
(51) Int. Cl.: F16B 41/00

(54) **Screwing structure**

(30) Priority: 24.03.2010 JP 2010067830
(71) Applicant: Yamatake Corporation, Tokyo 100-6419 (JP)
(72) Inventor: Mizobuchi, Manabu, Chiyoda-ku Tokyo 100-6419 (JP); Soeda, Kenichi, Chiyoda-ku Tokyo 100-6419 (JP); Suzuki, Hisashi, Chiyoda-ku Tokyo 100-6419 (JP)
(74) Representative: Tomlinson, Kerry John

(57) **Abstract**

There is provided a screwing structure for attaching a device (1) to an attachment surface with a screw. The structure includes: a hole (2) which is formed through the device (1) and through which the screw passes, wherein a diameter of the hole is larger than that a nominal diameter of the screw; and a holding member (3) configured to hold the screw and provided on an inner surface of the hole (2).

## Description

### Technical Field

The present invention relates to a screwing structure for attaching a device to an attachment surface with screws.

### Related Art

Conventionally, in many cases, small screws are used for attaching a small device such as a photoelectric switch to an attachment surface of a wall, a post, or the like. In such cases, the attachment surface is formed with female screws and holes are formed at prescribed positions of the small device in advance. Bushings are inserted in the respective holes. The small device is fixed to the attachment surface by inserting screws into the respective holes and screwing them. However, in this case, the operator needs to hold a screwdriver with one hand and to pinch a screw and press the small device to the attachment surface at a prescribed position with the other hand. Therefore, the screw likely drops while the operator is screwing it. The workability of this work is thus low.

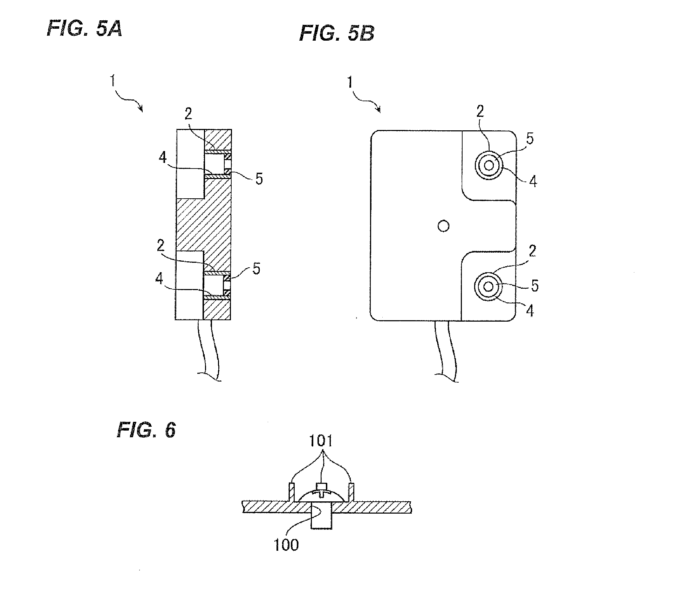

In view of the above, as shown in Fig. 6, a screwing structure has been proposed in which projections 101 for holding a screw head are formed in the vicinities of a hole 100 (refer to Patent document 1, for example). With this structure, the screw is prevented from dropping while it is being screwed and the workability is thereby increased (*see* e.g., JP-A-2004-340323).

However, in the screwing structure disclosed in Patent document 1, the projections 101 for holding a screw head need to be formed additionally in the vicinities of the hole 100. Since this is a factor of increasing the dimensions of the whole of a device, a problem arises that it is difficult to reduce the size of the device.
One method for reducing the size of the device is to decrease the thickness of the plate which is formed with the projections 101 and is to be pressed by screwing. However, this measure is associated with another problem that the strength is lowered by the thinning of the plate.

### SUMMARY

It is an illustrative aspect of the present invention to provide a screwing structure which, though being simpler, can lower the probability of dropping of a screw and which can also reduce the size of a device to be screwed.

According to one or more illustrative aspects of the present invention, there is provided a screwing structure for attaching a device to an attachment surface with a screw. The structure includes: a hole which is formed through the device and through which the screw passes, wherein a diameter of the hole is larger than a nominal diameter of the screw; and a holding member configured to hold the screw and provided on an inner surface of the hole.

According to the invention, the probability of dropping of the screw can be lowered though the screwing structure is simpler. Furthermore, forming the holding member or members on the inner surface of the hole enables miniaturization of the device.

### BRIEF DESCRIPTION OF THE DRAWINGS

Figs. 1A and 1B are a sectional view and a plan view, respectively, showing the structure of a photoelectric switch using a screwing structure according to a first embodiment of the invention;
Figs. 2A and 2B are sectional views illustrating how the photoelectric switch is attached using the screwing structure according to the first embodiment;
Figs. 3A and 3B are enlarged sectional views showing example states that a screw is held by projections in the first embodiment of the invention;
Figs. 4A and 4B are a sectional view and a plan view, respectively, showing the structure of a photoelectric switch using a screwing structure according to a second embodiment of the invention;
Figs. 5A and 5B are a sectional view and a plan view, respectively, showing the structure of a photoelectric switch using another screwing structure according to the second embodiment of the invention; and
Fig. 6 is a sectional view of a related-art screwing structure.

### DETAILED DESCRIPTION OF EXEMPLARY EMBODIMENTS

Embodiments of the present invention will be hereinafter described with reference to the drawings.

### First embodiment

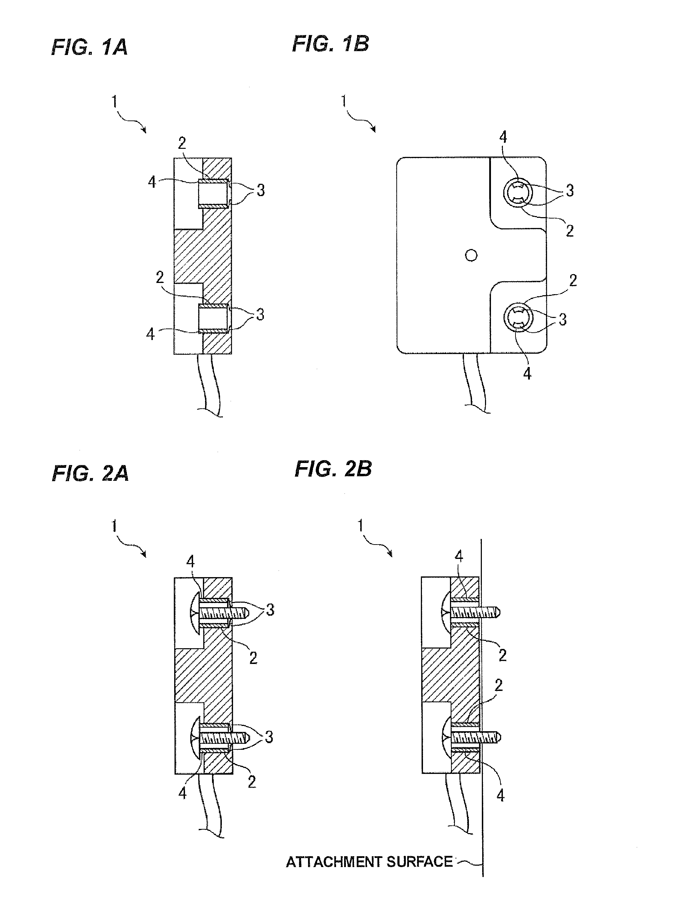

Figs. 1A and 1B are a sectional view and a plan view, respectively, showing the structure of a photoelectric switch 1 to which a screwing structure according to a first embodiment of the invention is applied.
As shown in Figs. 1A and 1B, screw insertion holes 2 are formed in the photoelectric switch 1 at prescribed positions. The diameter of the holes 2 is larger than that of a screw to be used. An attachment-surface-side end portion of the inner surface of each hole 2 is formed with projections (holding portions) 3 to be fitted with a screw and thereby hold it in advance. The projections 3 are integral with the photoelectric switch 1. A bushing 4 is press-fitted in each hole 2 shallowly. The inner surface of the bushing 4 is not formed with a female screw. In this example, the inner surface of each hole 2 is formed with two projections 3 in total.
The pair of projections 2 serve to reduce the substantial diameter of the hole 2. It is preferable that the interval between the two projections 2 be smaller than the nominal diameter of a screw to be used. However, as described later, the interval between the two projections 2 may be a little larger than the nominal diameter of a screw to be used.

Next, how the photoelectric switch 1 having the above structure is attached to an attachment surface will be described.

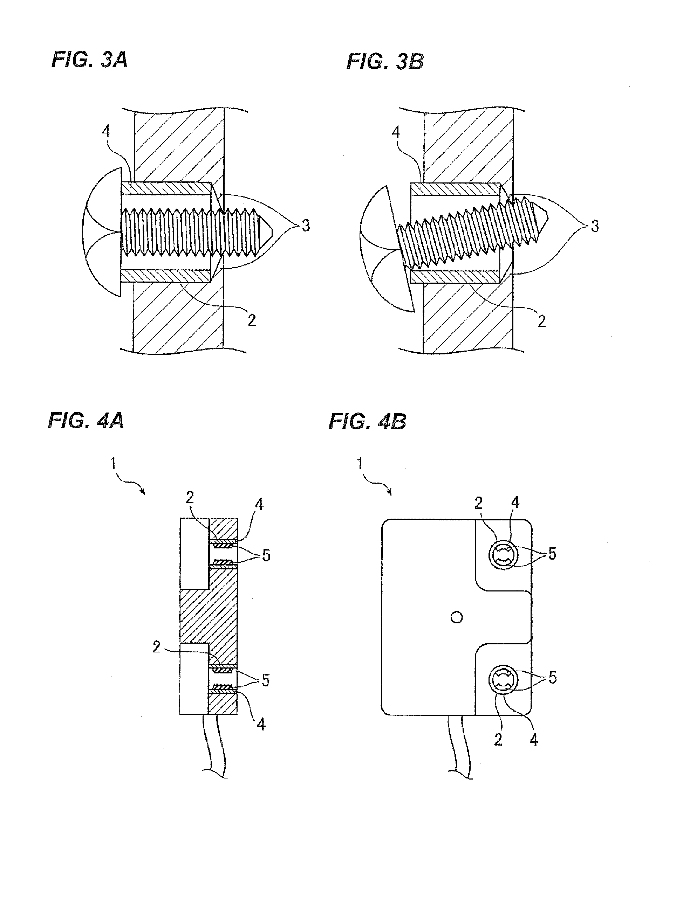

Figs. 2A and 2B are sectional views illustrating how the photoelectric switch 1 is attached to which the screwing structure according to the first embodiment of the invention is applied. Figs. 3A and 3B are enlarged sectional views showing example states that a screw is held by the projections 3 in the first embodiment of the invention. The attachment surface is formed with female screws at prescribed positions in advance.
To attach the photoelectric switch 1 to the attachment surface, first, as shown in Fig. 2A, screws are fitted into respective pairs of projections 3 so as to be held by the latter.
Where the interval between each pair of projections 3 is smaller than the nominal diameter of a screw used, the screw is held in place between the pair of projections 3 (see Fig. 3A). On the other hand, where the interval between each pair of projections 3 is a little larger than the nominal diameter of a screw used, the screw is inclined due to gravity because there are gaps between the screw and the pair of projections 3 (see Fig. 3B). The screw can still be held because the screw is caught by the upper projection 3.
Then, the operator performs screwing in such a manner that he holds a screwdriver with one hand and presses the photoelectric switch 1 to the attachment surface at a prescribed position with the other hand. As a result, as shown in Fig. 2B, each bushing 4 goes into the hole 2 and the pair of projections 3 that have held the screw are cut by the bushing 4. And each bushing 4 further goes into the hole 2. Each screw is thus retightened, whereby the photoelectric switch 1 can be fixed to the attachment surface strongly.
It suffices that the bushing 4 be made of such a hard material and have such an external form as to be able to cut the projections 3. For example, the invention encompasses cases that the bushing 4 is made of an elastic material such as rubber or elastomer, a resin material such as plastic, or a metal.

As described above, in the first embodiment, a pair of projections 3 in which a screw is fitted in advance is formed on the inner surface of each hole 2 of the photoelectric switch 1 so as to be integral with the photoelectric switch 1. Attachment work is performed in a state that screws are fitted in and held by the respective pairs of projections 3 in advance. Therefore, the operator can perform screwing by holding a screwdriver with one hand and pressing the photoelectric switch 1 with the other hand; that is, he need not pinch a screw. The operator can thus perform the attachment work easily whereas dropping of a screw is made less likely. Furthermore, forming a pair of projections 3 on the inner surface of each hole 2 makes it possible to reduce the size of the photoelectric switch 1.

### Second embodiment

In the first embodiment, a pair of projections 3 (holding members) are formed on the inner surface of each hole 2 so as to be integral with a photoelectric switch 1. On the other hand, in a second embodiment, as shown in Figs. 4A and 4B and Figs. 5A and 5B, an elastic member(s) 5 (holding member(s)) which is made or sponge, robber, or the like and is separate from the photoelectric switch 1 is attached to the inner surface of each bushing 4 over parts or all of the circumference of each bushing 4.
Work of attaching the photoelectric switch 1 is performed in a state that screws are fitted in and held by the respective (pairs of) elastic members 5 in advance, whereby the same advantages as in the first embodiment can be obtained.

Instead of attaching the elastic members 5 to the respective bushings 4, ring-shaped elastic members 5 may be attached to respective screws in advance. Then, the screws are inserted into the respective bushings 4 and screwing is performed.

Although the screwing structures according to the first and second embodiments are applied to the photoelectric switch 1, the present embodiment is not limited to such a case. They can likewise be applied to other devices.
Although in the screwing structures according to the first and second embodiments the two projections 3 (see Figs. 1A and 1B) or the two elastic members 5 (see Figs. 4A and 4B) are formed for each hole 2, the present embodiment is not limited to such cases.

## Claims

1. A screwing structure for attaching a device (1) to an attachment surface with a screw, the structure comprising:
a hole (2) which is formed through the device (1) and through which the screw passes, wherein a diameter of the hole is larger than a nominal diameter of the screw; and
a holding member (3;5) configured to hold the screw and provided on an inner surface of the hole (2).

2. The structure of claim **1,** wherein the holding member is a projection (3) which is a part of the device (1).

3. The structure of claim **1,** wherein the holding member is an elastic member (5) which is independent from the device (1).

4. The structure of claim **1, 2 or 3,** further comprising:
a bushing (4) fitted in the hole (2) and contacting a head portion of the screw.
